# EUROPÄISCHE PATENTSCHRIFT

(11) **EP 0 631 128 B1**
(45) Veröffentlichungstag und Bekanntmachung des Hinweises auf die Patenterteilung: **21.07.1999**
(21) Anmeldenummer: 94105849.7
(22) Anmeldetag: 15.04.1994
(51) Int. Cl.: G01N 21/59, G01N 21/53

(54) **Vorrichtung zur Untersuchung eines Gases**
Device for investigating a gas
Dispositif pour l'investigation d'un gaz

(30) Priorität: 07.05.1993 DE 4315152
(43) Veröffentlichungstag der Anmeldung: 28.12.1994
(73) Patentinhaber: ROBERT BOSCH GMBH, 70442 Stuttgart (DE)
(72) Erfinder: Hauck, Franz, Ing.(grad.), D-73770 Denkendorf (DE)

(56) Entgegenhaltungen:
- DE-A- 2 359 654
- DE-A- 2 701 901
- DE-A- 2 742 972
- DE-A- 3 441 280
- US-A- 4 544 273

## Beschreibung

### Stand der Technik

Die Erfindung geht aus von einer Vorrichtung zur Untersuchung eines Gases nach der Gattung des Hauptanspruchs. Aus einer Firmenschrift der Robert Bosch GmbH, "Bosch-Diesel-Rauchgas-Meßgerät RTT 100/110 (Trübungsmeßgerät), IA4/VPT-WAW 4470 D - 8.92 - 15 g, August 1992, ist eine gattungsgemäße Vorrichtung bekannt, die zur Bestimmung des Rußgehalts in Abgasen von Diesel-Brennkraftmaschinen eingesetzt wird. Das zu untersuchende Gas ist in einer Meßkammer eine vorgegebene Strecke im wesentlichen parallel zu einer optischen Strahlung geführt. Ausgewertet wird der Einfluß des Gases auf die optische Strahlung. Bei dem vorbekannten Abgasmeßgerät wird die Reduzierung der Strahlungsintensität ausgewertet, die von den im Abgas enthaltenen Rußpartikeln verursacht ist. In einer anderen Ausgestaltung könnte der Einfluß des zu untersuchenden Gases auf ein Strahlungsspektrum ausgewertet werden.

Die Gaszuführung zur Meßkammer erfolgt über einen Einlaß und Auslaß in der Meßkammer, die derart angeordnet sind, daß die Strömungsrichtung im Einlaß und im Auslaß jeweils senkrecht zur Strömungsrichtung in der optischen Meßstrecke ist. Sofern das zu untersuchende Gas Bestandteile enthält, die nicht gasförmig sind, kann eine Verschmutzung der Meßkammer und der optischen Komponenten auftreten. Dieses Problem tritt insbesondere bei Abgasen auf, die beispielsweise abgeriebene Metallpartikel, Kraftstoffadditive, Schwefelverbindungen oder beispielsweise in Wassertröpfchen gelöste Stoffe aufweisen können. Bei der bekannten Vorrichtung sind Heizungen vorgesehen, die jeweils an der Übergangsstelle von der Meßkammer zu den otpischen Komponenten angeordnet sind. Die Temperatur der Heizung ist so hoch vorzugeben, daß ein Abbrand der Verschmutzung auftritt. Schwierigkeiten bereiten diejenigen Bestandteile der Verschmutzung, die bei realisierbaren Temperaturen nicht ohne weiteres abbrennbar sind. Eine mechanische Reinigung nach einer vorgegebenen Betriebszeit der Meßkammer kann daher erforderlich sein.

Andere vorbekannte gattungsgemäße Vorrichtungen zur Untersuchung eines Gases sehen den Einsatz von Spülluft vor, um einer Verschmutzung über einen längeren Zeitraum entgegenzuwirken. Eine Vermischung von Spülluft mit dem zu untersuchenden Gas bringt aber stets den Nachteil mit sich, daß die Meßunsicherheit erhöht ist. Der ungünstige Einfluß auf das Meßergebnis tritt insbesondere auf, wenn der Druck des zu untersuchenden Gases Änderungen, insbesondere impulsförmigen Änderungen unterworfen ist. Die Meßstrecke ist in diesen Betriebszuständen nicht mehr eindeutig definiert.

Der Erfindung liegt die Aufgabe zugrunde, die gattungsgemäße Vorrichtung zur Untersuchung eines Gases unempfindlich gegenüber einer Verschmutzung, insbesondere einer Verschmutzung der optischen Komponenten zu machen.

Die Aufgabe wird durch die im unabhängigen Anspruch angegebenen Merkmale gelöst.

### Vorteile der Erfindung

Die erfindungsgemäße Vorrichtung weist den Vorteil auf, daß die Verschmutzung von optischen Komponenten, die an den Enden der Meßkammer angeordnet sind, mit einfachen konstruktiven Maßnahmen wesentlich verringert ist. Erfindungsgemäß ist vorgesehen, daß gegenüber dem Einlaß für das zu untersuchende Gas in Fortsetzung zu der im Einlaß vorliegenden Strömungsrichtung ein Eingang eines Bypasses angeordnet ist, dessen Ausgang gegenüber dem Auslaß in Fortsetzung zu der im Auslaß vorliegenden Strömungsrichtung liegt. Der Einlaß und Auslaß sind in bezug auf die optische Meßstrecke dabei derart anzuordnen, daß die Strömungsrichtung im Einlaß und im Auslaß jeweils einen vorgegebenen Winkel zur Strömungsrichtung in der optischen Meßstrecke aufweist. Die erfindungsgemäß vorgesehene Maßnahme führt zu einer Querströmung des zu untersuchenden Gases an den Enden der Meßkammer in bezug auf die Richtung der optischen Strahlung. Die Querströmung lenkt insbesondere im Bereich des Auslasses die aus der Meßkammer kommende Strömung in Richtung Auslaß ab. Die Anzahl der festen Bestandteile des Gases, welche die Querströmung durchdringen, ist erheblich reduziert. Weiterhin ist die Strömungsgeschwindigkeit in der Meßkammer reduziert, weil ein Teil des zu untersuchenden Gases durch den Bypass strömt. Die Reduzierung der Strömungsgeschwindigkeit unterstützt gleichzeitig die Wirkung der Querströmung. Die Aufprallgeschwindigkeit an optischen Komponenten derjenigen Bestandteile, die dennoch die Querströmung passieren, wird ebenfalls verringert.

Vorteilhafte Weiterbildungen und Verbesserungen der erfindungsgemäßen Vorrichtung ergeben sich aus Unteransprüchen.

Die vorzugebenden Winkel zwischen Einlaß einerseits und Auslaß andererseits in bezug auf die Richtung der optischen Strahlung sind vorzugsweise jeweils auf näherungsweise 90° festgelegt. Diese Ausgestaltung ermöglicht die einfachste konstruktive Realisierung des Einlasses, des Auslasses, der Meßkammer und des Bypasses, wobei gleichzeitig die Wirkung der Querströmung beim Einlaß und beim Auslaß optimal ist.

Die Aufteilung der Gasanteile zwischen Meßkammer und Bypass erfolgt vorzugsweise mit einer definierten Querschnittsverengung am Bypass, insbesondere an dessem Eingang.

Als optische Komponenten, die an die Meßkammer angrenzen, sind vorzugsweise Quarzstäbe vorgesehen, die als Strahlungsleiter wirken. Die Quarzstäbe ermöglichen eine Trennung zwischen der Meßkammer und weiteren optischen Komponenten wie beispielsweise Strahlungsquellen oder Strahlungssensoren. Ein weiterer Vorteil ist die Möglichkeit der Beheizung der Quarzstäbe, insbesondere im Bereich des Übergangs zur Meßkammer mit hohen Betriebstemperaturen. Die Wirkung der Beheizung, insbesondere eine Reduzierung der Heizleistung durch Reduzierung der thermischen Abstrahlung ist durch die Verwendung von Blenden möglich, die vor den Stäben angeordnet sind.

Die erfindungsgemäße Vorrichtung ist geeignet zur Untersuchung eines Gases, das Bestandteile enthält, die eine Verschmutzung der optischen Komponenten der optischen Meßstrecke verursachen können. Solche Gase sind beispielsweise Abgase, die insbesondere Rußpartikel enthalten. Eine bevorzugte Verwendung ist daher in einem Meßgerät zur Untersuchung von Abgasen einer Diesel-Brennkraftmaschine gegeben.

Weitere vorteilhafte Weiterbildungen und Verbesserungen der erfindungsgemäßen Vorrichtung ergeben sich aus weiteren Unteransprüchen in Verbindung mit der folgenden Beschreibung.

### Zeichnung

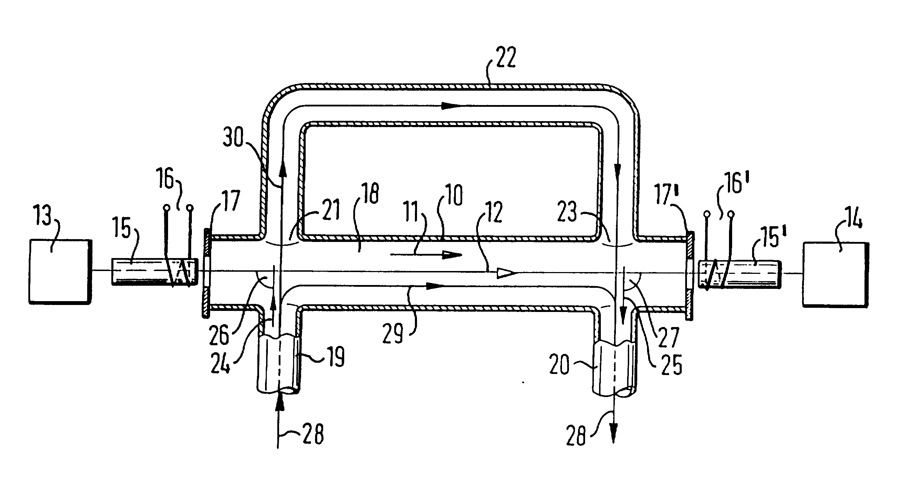

Die Figur zeigt eine erfindungsgemäße Vorrichtung zum Untersuchen von Gasen.

Die Figur zeigt eine Meßkammer 10, in der ein zu untersuchendes Gas geführt ist. Das Gas ist im wesentlichen parallel zur Richtung 11 einer optischen Strahlung 12 geführt. Die optische Strahlung 12 wird von einer Strahlungsquelle 13 abgegeben und von einem Strahlungssensor 14 empfangen. Zwischen Strahlungsquelle 13 und Meßkammer 10 einerseits sowie zwischen Strahlungsempfänger 14 und Meßkammer 10 andererseits sind jeweils Quarzstäbe 15, 15' angeordnet. Die Ouarzstäbe 15, 15' weisen jeweils an ihrem an die Meßkammer 10 grenzenden Ende eine Heizung 16, 16' auf, die in der Figur als elektrische Heizdrahtwicklung mit entsprechenden elektrischen Anschlüsse symbolisiert ist. Zwischen den Quarzstäben 15, 15' und der Meßkammer 10 sind jeweils Blenden 17, 17' angeordnet.

Die optischen Komponenten 13, 14, 15, 15', 17, 17' bilden zusammen mit der Meßkammer 10 eine optische Meßstrecke 18, der das zu untersuchende Gas ausgesetzt ist.

Das Gas wird der Meßkammer 10 über einen Einlaß 19 zugeführt und es verläßt die Meßkammer 10 über einen Auslaß 20. Gegenüber dem Einlaß 19 ist ein Eingang 21 eines Bypasses 22 angeordnet. Ein Ausgang 23 des Bypasses 22 liegt gegenüber dem Auslaß 20. Der Begriff "gegenüber" bedeutet, daß der Eingang 21 des Bypasses 22 in Fortsetzung zu der im Einlaß 19 vorliegenden Strömungsrichtung 24 des Gases liegt und daß der Ausgang 23 des Bypasses 22 in Fortsetzung zu der im Auslaß 20 vorliegenden Strömungsrichtung 25 liegt. Die Strömungsrichtung 24 im Einlaß 19 bildet mit der Richtung 11 der optischen Strahlung 12 einen ersten vorgegebenen Winkel 26 und die Strömungsrichtung 25 im Auslaß 20 bildet mit der Richtung 11 der optischen Strahlung 12 einen zweiten vorgegebenen Winkel 27.

Ein Volumenstrom 28 des zu untersuchenden Gases, der im Einlaß 19 auftritt, wird aufgeteilt in einen ersten Volumenteilstrom 29, der in der Meßkammer 18 strömt, und in einen zweiten Volumenteilstrom 30, der im Bypass 22 strömt. Im Auslaß 20 sind die beiden Volumen-teilströme 29, 30 wieder zum gesamten Volumenstrom 28 vereinigt.

Die erfindungsgemäße Vorrichtung zur Untersuchung eines Gases arbeitet folgendermaßen:

Ein Volumenstrom 28 des zu untersuchenden Gases wird über den Einlaß 19 in die Meßkammer 18 geleitet. Der erste Volumenteilstrom 29 strömt in der Meßkammer 18 im wesentlichen parallel zur optischen Strahlung 12 mit der eine Wechselwirkung stattfindet. Die optische Strahlung 12 wird von der Strahlungsquelle 13 abgegeben, die beispielsweise eine Glühlampe, vorzugsweise eine Halogen-Glühlampe oder beispielsweise eine Laserquelle, vorzugsweise ein Halbleiterlaser sein kann. Die optische Strahlung 12 wird vom Strahlungsempfänger 14 empfangen, der beispielsweise eine Fotodiode sein kann, die ein Signal abgibt, das proportional zur Bestrahlungsstärke ist. Anstelle einer Fotodiode kann ein ein- oder zweidimensionales Fotodiodenarray vorgesehen sein. Anstelle der Bewertung der Intensität oder zusätzlich kann eine Bewertung des Spektrums der optischen Strahlung 12 vorgesehen sein.

Die optische Strahlung 12 ist an den beiden Enden der Meßkammer 18 über die Quarzstäbe 15, 15' angekoppelt. Die Stäbe 15, 15' entkoppeln die Strahlungsquelle 13 sowie den Strahlungsempfänger 14 von der Meßkammer 18. Die thermische Entkopplung ist insbesondere beim Strahlungsempfänger 14 erforderlich, falls das zu untersuchende Gas eine hohe Temperatur aufweist. Anstelle der Stäbe 15, 15' ist es ebenso möglich, andere strahlungsleitende Komponenten einzusetzen. Die Verwendung speziell von Quarz weist den Vorteil auf, daß eine hohe Betriebstemperatur ermöglicht wird. Eine derartig hohe Betriebstemperatur kann erforderlich werden, falls ein Abbrennen von Verschmutzungsrückständen auf der Oberfläche der Quarzstäbe 15, 15' vorgesehen ist, deren Oberfläche jeweils an die Meßkammer 18 grenzen. Zu diesem Zweck ist die Heizung 16, 16' vorgesehen. Eine Reduzierung der Heizleistung ermöglicht die Blende 17, 17', welche die Abstrahlung thermischer Energie in die Meßkammer 18 reduziert. Weiterhin ermöglicht die Festlegung der Blendenöffnung die Anpassung an die Abmessungen der Oberfläche der Quarzstäbe 15, 15'.

Bei der erfindungsgemäßen Vorrichtung ist das Verschmutzungsproblem erheblich reduziert. Erreicht wird diese Reduzierung durch die Querströmung des zu untersuchenden Gases in bezug auf die Richtung 11 der optischen Strahlung 12 an den beiden Enden der Meßkammer 18. Die Querströmung unterbindet insbesondere im Bereich des Auslasses 20 die Weiterströmung des ersten Volumenteilstroms 29, der in der Meßkammer 18 auftritt, über den Bereich des Auslasses 20 hinaus in Richtung Oberfläche des Quarzstabes 15'. Eine Reduzierung einer möglichen Verschmutzung tritt ebenso im Bereich des Einlasses 19 dadurch auf, daß beispielsweise eine Wirbelbildung im Bereich des Einlasses 19 weitgehend vermieden wird, bei der Partikelströmungen in Richtung des Quarzstabes 15 entstehen könnten. Die Wirkung der Querströmungen wird maximal, wenn die Winkel 26, 27 jeweils wenigstens näherungsweise 90° betragen. Die Vorgabe anderer Winkel als 90° ist in Abhängigkeit von konstruktiven Überlegungen und in Abhängigkeit von vorzugebenden Strömungsverhältnissen möglich, wobei der erste Winkel 26 und der zweite Winkel 27 nicht notwendigerweise gleiche Werte aufweisen müssen.

Eine Aufteilung des Volumenstroms 28 in den in der Meßkammer 18 strömenden ersten Volumenteilstrom 29 und in den im Bypass 22 strömenden zweiten Volumenteilstrom 30 ist durch entsprechende Querschnittsvorgaben, insbesondere beim Eingang 21 des Bypasses 22 einstellbar.

## Patentansprüche

1. Vorrichtung zur Untersuchung eines Gases, mit einer Meßkammer (10), die zusammen mit einer Strahlungsquelle (13) und einem Strahlungssensor (14) eine optische Meßstrecke (18) bildet und in der das zu untersuchende Gas eine vorgegebene Strecke im wesentlichen parallel zu einer optischen Strahlung (12) geführt ist, mit einem an einem Ende der Meßkammer (10) angeordneten Einlaß (19) und einem am anderen Ende der Meßkammer (10) angeordneten Auslaß (20) für das zu untersuchende Gas, wobei der Einlaß (19) und der Auslaß (20) in Bezug auf die optische Strahlung (12) derart angeordnet sind, daß die Strömungsrichtung (24) im Einlaß (19) und die Strömungsrichtung (25) im Auslaß (20) jeweils einen vorgegebenen Winkel (26, 27) zur Richtung (11) der optischen Strahlung (12) aufweist, dadurch gekennzeichnet, daß gegenüber dem Einlaß (19) in Fortsetzung zu der im Einlaß (19) vorliegenden Strömungsrichtung (24) ein Eingang (21) eines Bypasses (22) angeordnet ist, dessen Ausgang (23) gegenüber dem Auslaß (20) in Fortsetzung zu der im Auslaß (20) vorliegenden Strömungsrichtung (25) liegt.

2. Vorrichtung nach Anspruch 1, dadurch gekennzeichnet, daß der Winkel (26, 27) auf näherungsweise 90° C festgelegt ist.

3. Vorrichtung nach Anspruch 1, dadurch gekennzeichnet, daß der Bypass (22) eine Querschnittsverengung zur Festlegung des im Bypass (22) auftretenden Volumenteilstroms (30) des zu untersuchenden Gases aufweist.

4. Vorrichtung nach Anspruch 1, dadurch gekennzeichnet, daß an wenigstens einem Ende der Meßkammer (18) ein Quarzstab (15, 15') vorgesehen ist.

5. Vorrichtung nach Anspruch 4, dadurch gekennzeichnet, daß eine Heizung (16, 16') für den Quarzstab (15, 15') vorgesehen ist.

6. Vorrichtung nach Anspruch 4, dadurch gekennzeichnet, daß zwischen der Meßkammer (18) und dem Quarzstab (15, 15') eine Blende (17, 17') angeordnet ist.

7. Verwendung der in Anspruch 1 gekennzeichneten Vorrichtung zur Untersuchung von Gasen mit nichtgasförmigen Bestandteilen.

8. Verwendung nach Anspruch 7, wobei als zu untersuchendes Gas ein Abgas eines Verbrennungsvorgangs vorgesehen ist.

9. Verwendung der in Anspruch 1 gekennzeichneten Vorrichtung in einem Meßgerät zur Untersuchung von Abgasen einer Diesel-Brennkraftmaschine.

## Claims

1. Device for examining a gas, having a measuring chamber (10) which, together with a radiation source (13) and a radiation sensor (14), forms an optical measuring section (18), and in which the gas to be examined is led, over a predetermined distance, essentially parallel to optical radiation (12), having an inlet (19), arranged at one end of the measuring chamber (10), and having an outlet (20), arranged at the other end of the measuring chamber (10), for the gas to be examined, the inlet (19) and the outlet (20) being arranged in relation to the optical radiation (12) in such a way that the direction of flow (24) in the inlet (19) and the direction of flow (25) in the outlet (20) are each at a predetermined angle (26, 27) to the direction (11) of the optical radiation (12), characterized in that an entrance (21) of a bypass (22) is arranged opposite the inlet (19) as a continuation of the direction of flow (24) prevailing in the inlet (19), the exit (23) of the said bypass being located opposite the outlet (20) as a continuation of the direction of flow (25) prevailing in the outlet (20).

2. Device according to Claim 1, characterized in that the angle (26, 27) is fixed at approximately 90°.

3. Device according to Claim 1, characterized in that the bypass (22) has a cross-sectional narrowing for fixing that part volume flow (30) of the gas to be examined which occurs in the bypass (22).

4. Device according to Claim 1, characterized in that a quartz bar (15, 15') is provided at at least one end of the measuring chamber (18).

5. Device according to Claim 4, characterized in that heating (16, 16') is provided for the quartz bar (15, 15').

6. Device according to Claim 4, characterized in that a diaphragm (17, 17') is arranged between the measuring chamber (18) and the quartz bar (15, 15').

7. Use of the device characterized in Claim 1 for examining gases having non-gaseous constituents.

8. Use according to Claim 7, an exhaust gas from a combustion operation being provided as the gas to be examined.

9. Use of the device characterized in Claim 1 in a meter for examining exhaust gases from a diesel internal combustion engine.

## Revendications

1. Dispositif d'analyse d'un gaz comprenant une chambre de mesure (10) formant un chemin de mesure optique (18) avec une source de rayonnement (13) et un capteur de rayonnement (14), et dans laquelle le gaz à analyser parcourt un chemin prédéterminé essentiellement parallèle au rayonnement optique (12), cette chambre (10) comportant à une extrémité une entrée (19) et à son autre extrémité, une sortie (20) pour le gaz analysé,
l'entrée (19) et la sortie (20) étant disposées par rapport au rayonnement optique (12) pour que la direction d'écoulement (24) à l'entrée (19) et la direction d'écoulement (25) à la sortie (20) fassent un angle prédéterminé (26, 27) par rapport à la direction (11) du rayonnement optique (12),
caractérisé par
une entrée (21) d'une dérivation (22) en regard de l'entrée (19) dans le prolongement de la direction d'écoulement (24) de l'entrée (19), dérivation dont la sortie (23) est en regard de la sortie (20) dans le prolongement de la direction d'écoulement (25) de la sortie (20).

2. Dispositif selon la revendication 1,
caractérisé en ce que
l'angle (26, 27) est fixé approximativement à 90°.

3. Dispositif selon la revendication 1,
caractérisé en ce que
la dérivation (22) présente une réduction de section pour fixer le débit partiel (30) du gaz à analyser passant par la dérivation (22).

4. Dispositif selon la revendication 1,
caractérisé par
une tige de quartz (15, 15') prévue à au moins une extrémité de la chambre de mesure (18).

5. Dispositif selon la revendication 4,
caractérisé en ce que
la tige de quartz (15, 15') comporte un moyen de chauffage (16, 16').

6. Dispositif selon la revendication 4,
caractérisé par
un diaphragme (17, 17') entre la chambre de mesure (18) et la tige de quartz (15, 15').

7. Application du dispositif selon la revendication 1 pour l'analyse de gaz contenant des composants non gazeux.

8. Application selon la revendication 7,
caractérisé en ce que
le gaz à analyser est un gaz résultant d'une opération de combustion.

9. Application du dispositif selon la revendication 1 à l'appareil de mesure pour l'analyse des gaz d'échappement des moteurs Diesel.
